# EUROPEAN PATENT SPECIFICATION

(11) **EP 3 492 773 B1**
(45) Date of publication and mention of the grant of the patent: **06.09.2023**
(21) Application number: 17833931.3
(22) Date of filing: 23.06.2017
(51) Int. Cl.: F16F 15/04, F16F 1/387, F16F 15/08

(54) **ANTI-VIBRATION DEVICE**
ANTIVIBRATIONSVORRICHTUNG
DISPOSITIF ANTI-VIBRATION

(30) Priority: 27.07.2016 JP 2016147127
(43) Date of publication of application: 05.06.2019
(73) Proprietor: Prospira Corporation, Kanagawa prefecture 212-0013 (JP)
(72) Inventor: KOJIMA, Hiroshi, Tokyo 104-8340 (JP)
(74) Representative: Marks & Clerk LLP
(86) International application number: PCT/JP2017/023235
(87) International publication number: WO 2018/020922

(56) References cited:
- WO-A1-2011/148575
- WO-A1-2012/001906
- DE-A1-102010 043 165
- DE-A1-102014 216 068
- JP-A- 2016 070 436
- JP-B2- 2 812 362
- JP-B2- 5 646 213
- JP-B2- 5 759 328

## Description

### TECHNICAL FIELD

The present disclosure relates to an anti-vibration device.

### BACKGROUND

A known conventional anti-vibration device includes: a first attachment member (bracket) configured to be connected to one of a vibration generating portion and a vibration receiving portion; and a main body member formed by bonding an elastic body to a second attachment member (attachment portion) configured to be connected to the other one of the vibration generating portion and the vibration receiving portion, wherein the main body member is installed inside the first attachment member in a state in which a compressive force is applied to its leg portions (for example, see JP 2011-214634 A (PTL 1)).

WO 2012/001906 A1 discloses an anti-vibration device according to the preamble of claim 1.

### CITATION LIST

### Patent Literature

PTL 1: JP 2011-214634 A

### SUMMARY

### (Technical Problem)

An anti-vibration device of a structure in which the elastic body is located between the first attachment member and the second attachment member without forming the main body member by bonding the elastic body to the second attachment member has also been studied.

However, in an anti-vibration device of such a structure, the spring constant in the direction in which the first attachment member and the second attachment member face each other, e.g. the spring constant in the up-down direction when the first attachment member and the second attachment member are arranged with a spacing in the up-down direction, is high. Accordingly, in the case where the spring constant in this direction needs to be reduced, a sufficient reduction of the spring constant is difficult.

It could therefore be helpful to provide an anti-vibration device that can reduce the spring constant in the direction in which the first attachment member and the second attachment member face each other.

### (Solution to Problem)

The problem is solved by an anti-vibration device according to the invention as claimed in claim 1. An anti-vibration device, which is an engine mount, according to the present disclosure comprises: a first attachment member configured to be connected to one of a vibration generating portion and a vibration receiving portion; a second attachment member configured to be connected to an other one of the vibration generating portion and the vibration receiving portion; and an elastic body located between the first attachment member and the second attachment member and having an upper end surface, wherein the first attachment member includes an upper partition wall and a lower partition wall arranged with a spacing in an up-down direction, a space that is open in a direction intersecting the up-down direction is formed between the upper partition wall and the lower partition wall, and the second attachment member and the elastic body are located in the space, the lower partition wall of the first attachment member has a first recess that is a downward recess and in which a lower end portion of the elastic body is housed, the second attachment member has a second recess that is an upward recess and in which an upper end portion of the elastic body is housed, and a concavity portion forming a space with the elastic body is formed in the second recess. The elastic body is a block body. The upper end surface of the elastic body is a flat end surface without a notch. The concavity portion is shaped by a dome-shaped curved surface recessed upward. The elastic body has at least one through hole extending in a longitudinal direction or a transverse direction of the anti-vibration device. The longitudinal direction of the anti-vibration device corresponds to a front-back direction of the vehicle when mounted on a vehicle, and the transverse direction of the anti-vibration device corresponds to a right-left direction of the vehicle when mounted on the vehicle. The anti-vibration device according to the present disclosure can reduce the spring constant in the direction in which the first attachment member and the second attachment member face each other.

In the anti-vibration device according to the present disclosure, the elastic body may have a notch on a lower end surface facing the first recess. In this case, the spring constant in the direction in which the first attachment member and the second attachment member face each other can be further reduced.

In the anti-vibration device according to the present disclosure, the concavity portion is formed in the second recess, and the notch may be formed on the lower end surface of the elastic body. In this case, the concavity portion is not formed in the first recess of the lower partition wall of the first attachment member, with it being possible to reduce an increase in the dimension between the lower partition wall and the upper partition wall of the first attachment member, that is, the dimension of the anti-vibration device in the direction in which the first attachment member and the second attachment member face each other. Hence, the spring constant can be reduced effectively without upsizing the whole anti-vibration device.

In the anti-vibration device according to the present disclosure, the concavity portion is shaped by a dome-shaped curved surface. In this case, when vibration is input to the elastic body and the elastic body enters into the concavity portion, the elastic body undergoes displacement with respect to the concavity portion (i.e. enters into the concavity portion) gently, so that the spring constant can be reduced smoothly.

### (Advantageous Effect)

It is thus possible to provide an anti-vibration device that can reduce the spring constant in the direction in which the first attachment member and the second attachment member face each other.

### BRIEF DESCRIPTION OF THE DRAWINGS

In the accompanying drawings:
FIG. 1 is a perspective view illustrating an anti-vibration device according to one of the disclosed embodiments from above on one side;
FIG. 2 is a perspective view illustrating the anti-vibration device in FIG. 1 from above on the other side;
FIG. 3 is an exploded perspective view illustrating the anti-vibration device in FIG. 1 in a disassembled state from above on one side;
FIG. 4 is an exploded perspective view illustrating the anti-vibration device in FIG. 1 in a disassembled state from below on one side;
FIG. 5 is a sectional view illustrating the anti-vibration device in FIG. 1 in section A-A along its longitudinal direction; and
FIG. 6 is a sectional view illustrating the anti-vibration device in FIG. 1 in section B-B along its transverse direction.

### DETAILED DESCRIPTION

An anti-vibration device according to one of the disclosed embodiments will be described below, with reference to drawings.

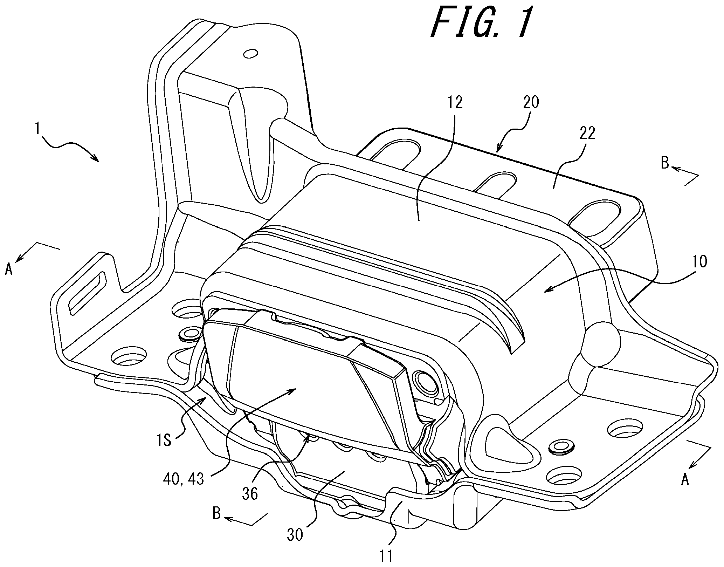

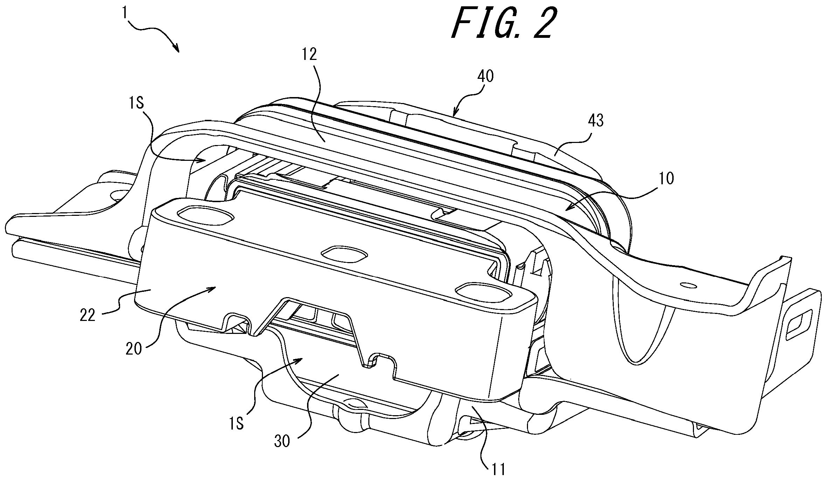

In FIGS. 1 and 2, reference sign 1 is an anti-vibration device according to one of the disclosed embodiments. The anti-vibration device 1 according to this embodiment is an engine mount located between a vehicle body (chassis) and an engine. FIG. 1 illustrates the anti-vibration device 1 according to this embodiment from above on one side, and FIG. 2 illustrates the anti-vibration device 1 from above on the other side.

When mounted on the vehicle, the anti-vibration device 1 according to this embodiment has its transverse direction (the depth direction of the drawing in FIGS. 1 and 2) corresponding to the right-left direction of the vehicle, and its longitudinal direction (the right-left direction of the drawing in FIGS. 1 and 2) corresponding to the front-back direction of the vehicle. Moreover, when mounted on the vehicle, the anti-vibration device 1 according to this embodiment has its height direction (the up-down direction of the drawing in FIGS. 1 and 2) corresponding to the up-down direction of the vehicle.

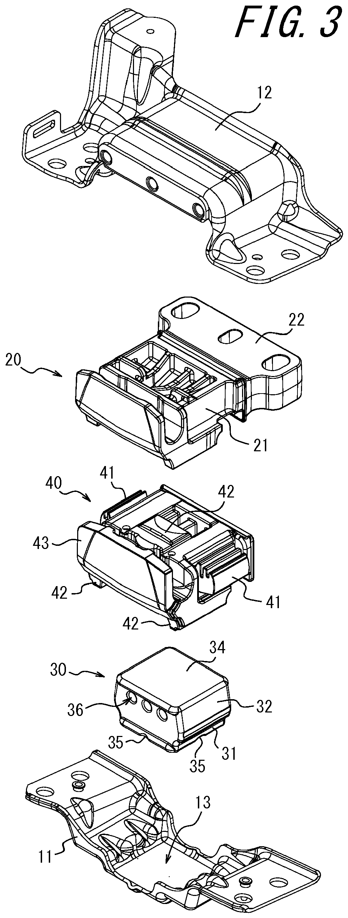

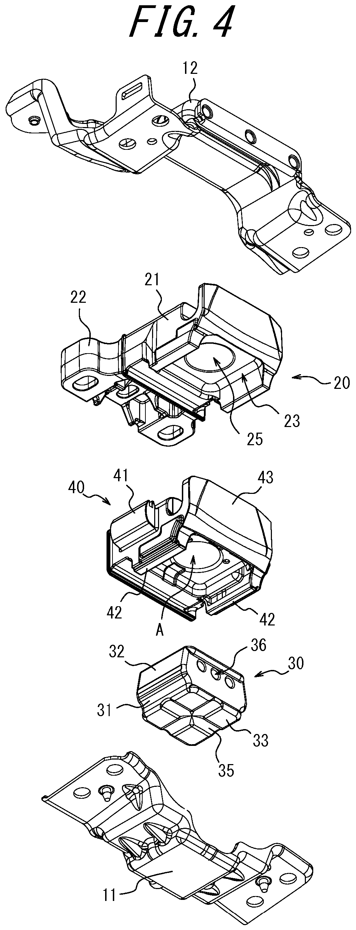

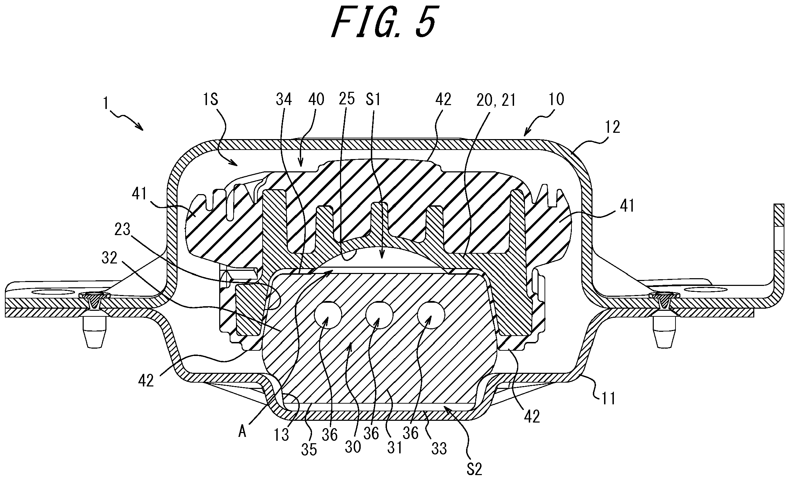

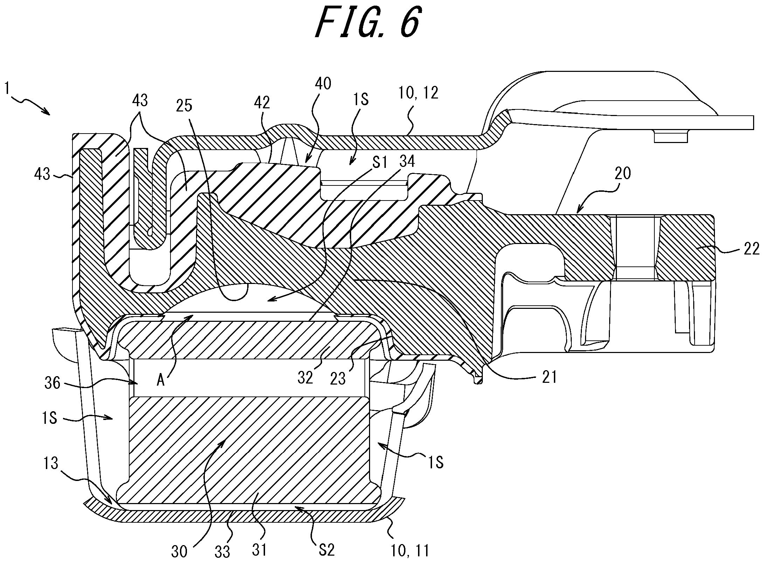

Reference sign 10 is a first attachment member configured to be connected to one of a vibration generating portion and a vibration receiving portion. In this embodiment, the first attachment member 10 is connected to the vehicle body or a member connected to the vehicle body. In this embodiment, the first attachment member 10 includes a lower partition wall 11 and an upper partition wall 12, and is formed by fitting together these partition walls to face each other. Specifically, when the lower partition wall 11 and the upper partition wall 12 arranged with a spacing in the up-down direction as illustrated in the exploded perspective views of FIGS. 3 and 4 are fitted together, a space 1S is formed between the lower partition wall 11 and the upper partition wall 12 as illustrated in FIGS. 5 and 6. In this embodiment, the space 1S is open in a direction intersecting the up-down direction as illustrated in FIGS. 1 and 2 (the right-left direction of the vehicle when mounted on the vehicle in this embodiment).

Reference sign 20 is a second attachment member configured to be connected to the other one of the vibration generating portion and the vibration receiving portion. In this embodiment, the second attachment member 20 is connected to the engine or a member connected to the engine. In this embodiment, the second attachment member 20 includes a main body portion 21 and an engine attachment portion 22, as illustrated in FIGS. 3 and 4.

Reference sign 30 is an elastic body located between the first attachment member 10 and the second attachment member 20. In this embodiment, the elastic body 30 is a block body, as illustrated in FIGS. 3 and 4. In this embodiment, the elastic body 30 is approximately cube-shaped, as illustrated in FIGS. 3 and 4. The elastic body 30 is made of an elastic material such as rubber.

Reference sign 40 is a stopper. In this embodiment, the stopper 40 is made of an elastic material such as rubber, as an elastic member for covering the main body portion 21 of the second attachment member 20.

In this embodiment, the stopper 40 includes longitudinal stopper portions 41 on both sides in the longitudinal direction of the anti-vibration device 1 (hereafter also simply referred to as "longitudinal direction"), as illustrated in FIG. 5 as an example. When mounted on the vehicle, the longitudinal stopper portions 41 regulate the relative movement of the first attachment member 10 and the second attachment member 20 in the front-back direction of the vehicle.

In this embodiment, the stopper 40 also includes height-direction stopper portions 42 on both sides in the height direction of the anti-vibration device 1 (hereafter also simply referred to as "height direction"). When mounted on the vehicle, the height-direction stopper portions 42 regulate the relative movement of the first attachment member 10 and the second attachment member 20 in the up-down direction of the vehicle.

In this embodiment, the stopper 40 also includes a transverse stopper portion 43 installed so as to sandwich one end portion of the upper partition wall 12 on one side in the transverse direction of the anti-vibration device 1 (hereafter also simply referred to as "transverse direction"), as illustrated in FIG. 6 as an example. When mounted on the vehicle, the transverse stopper portion 43 regulates the relative movement of the first attachment member 10 and the second attachment member 20 in the right-left direction of the vehicle. In this embodiment, the longitudinal stopper portions 41, the height-direction stopper portions 42, and the transverse stopper portion 43 are each configured with part of the second attachment member 20 as a core material.

In this embodiment, the second attachment member 20 and the elastic body 30 are located in the space 1S formed inside the first attachment member 10.

In this embodiment, a first recess 13 which is a downward recess is formed inside the first attachment member 10, as illustrated in FIGS. 5 and 6. The lower end portion (one end portion) 31 of the elastic body 30 is housed in the first recess 13. Specifically, the first recess 13 is formed in the lower partition wall 11 of the first attachment member 10. In this embodiment, the first recess 13 is configured as a first fitting recess into which the lower end portion 31 of the elastic body 30 is fitted. In this embodiment, the first recess 13 is fitted with the lower end portion 31 of the elastic body 30 only at both sides in the longitudinal direction as illustrated in FIGS. 5 and 6 (in particular. see FIG. 5), thus imposing restriction only in the front-back direction of the vehicle when mounted on the vehicle.

The first recess 13 may be fitted with the whole periphery of the lower end portion 31 of the elastic body 30 or with the lower end portion 31 of the elastic body 30 only in the transverse direction, depending on the purpose, use, and the like of the anti-vibration device.

In this embodiment, a second recess 23 which is an upward recess is formed in the second attachment member 20, as illustrated in FIGS. 5 and 6. The upper end portion (other end portion) 32 of the elastic body 30 is housed in the second recess 23. Specifically, the second recess 23 is formed in the main body portion 21 of the second attachment member 20. In this embodiment, the second recess 23 is configured as a second fitting recess into which the upper end portion 32 of the elastic body 30 is fitted. In this embodiment, the second recess 23 is fitted with the upper end portion 32 of the elastic body 30 only at both sides in the longitudinal direction as illustrated in FIGS. 5 and 6 (in particular, see FIG. 5), thus imposing restriction only in the front-back direction of the vehicle when mounted on the vehicle. In the case where the spring force in the transverse direction (the right-left direction of the vehicle when mounted on the vehicle in this embodiment) needs to be improved, however, the second recess 23 may be fitted with the upper end portion 32 of the elastic body 30 not only in the longitudinal direction but also in the transverse direction.

Although the upper end portion 32 of the elastic body 30 is housed in the second recess 23 of the second attachment member 20 via part of the stopper 40 in this embodiment, the upper end portion 32 of the elastic body 30 may be directly housed in the second recess 23 of the second attachment member 20 without the stopper 40 being interposed therebetween. The second recess 23 may be fitted with the whole periphery of the upper end portion 32 of the elastic body 30 or with the upper end portion 32 of the elastic body 30 only in the transverse direction, depending on the purpose, use, and the like of the anti-vibration device.

Thus, the second attachment member 20 and the elastic body 30 are located in the space 1S formed inside the first attachment member 10, and the elastic body 30 connects the first attachment member 10 and the second attachment member 20 in a state of being sandwiched between the lower partition wall 11 of the first attachment member 10 and the second attachment member 20. In this embodiment, the main body portion 21 of the second attachment member 20 and the elastic body 30 are located in the space 1S formed inside the first attachment member 10, and the engine attachment portion 22 of the second attachment member 20 projects from the opening of the space 1S, as illustrated in FIG. 6 as an example.

Moreover, in the present disclosure, a concavity portion forming a space S1 with the elastic body 30 is formed in the second recess 23 of the second attachment member 20.

In this embodiment, a concavity portion 25 is formed in the second recess 23 of the second attachment member 20 as the concavity portion, as illustrated in FIG. 4. In this embodiment, the inner surface of the concavity portion 25 is a dome-shaped curved surface, as illustrated in FIGS. 4 to 6.

In this embodiment, the stopper 40 has an opening A, as illustrated in FIG. 4. The opening A uncovers the concavity portion 25 formed in the second attachment member 20 when the stopper 40 covers the second attachment member 20.

In this embodiment, the upper end surface 34 of the elastic body 30 is a flat end surface without a notch (concavity portion), as illustrated in FIG. 3.

In this embodiment, the upper end portion 32 of the elastic body 30 is fitted into the second recess 23 of the second attachment member 20 via part of the stopper 40. The space S1 defined by the concavity portion 25 of the second attachment member 20, the opening A of the stopper 40, and the upper end surface 34 of the elastic body 30 is thus formed between the second attachment member 20 and the elastic body 30 in this embodiment, as illustrated in FIGS. 5 and 6. In the anti-vibration device 1 according to this embodiment, the space S1 is defined by at least the concavity portion 25 of the second attachment member 20 and the upper end surface 34 of the elastic body 30, and the stopper 40 may be omitted.

As a result of forming at least the space S1 between the second attachment member 20 and the elastic body 30 by the concavity portion 25 formed in the second attachment member 20 as in the anti-vibration device 1 according to this embodiment, the part of the elastic body 30 deformed during vibration input/output can be released to the space S1. Therefore, by forming the concavity portion 25 at least in the second attachment member 20 in contact with the elastic body 30, mainly the spring constant in the direction in which the first attachment member 10 and the second attachment member 20 face each other, e.g. the spring constant in the up-down direction (height direction) in the case where the first attachment member 10 and the second attachment member 20 are arranged with a spacing in the up-down direction when mounted on the vehicle, can be reduced.

According to the present disclosure, the concavity portion forming the space S1 with the elastic body 30 is formed in the second recess 23 of the second attachment member 20. Such a concavity portion may be formed in the first attachment member 10, specifically in the lower partition wall 11, in addition to the concavity portion 25 of the second attachment member 20. The spring constant in the up-down direction can be reduced in this case, too.

For example, the anti-vibration device 1 according to this embodiment may be modified to form, in addition to the concavity portion 25, another concavity portion in the first recess 13 of the lower partition wall 11 of the first attachment member 10. This increases the space S1 as compared with the case of forming only the concavity portion 25 in the second recess 23 of the second attachment member 20 as in this embodiment, so that the spring constant in the up-down direction can be further reduced.

Further, in this embodiment, a notch 35 is formed on the lower end surface 33 of the elastic body 30, as illustrated in FIG. 4 and the like. In this embodiment, the notch 35 is a cross-shaped recess formed by intersection of a recess extending in the longitudinal direction and a recess extending in the transverse direction, as illustrated in FIG. 4.

In this embodiment, the first recess 13 of the lower partition wall 11 of the first attachment member 10 is a recess having a flat bottom surface without a concavity portion, as illustrated in FIG. 3.

In this embodiment, the lower end portion 31 of the elastic body 30 is fitted into the first recess 13 of the lower partition wall 11 of the first attachment member 10. A space S2 defined by the first recess 13 formed in the lower partition wall 11 and the notch 35 of the elastic body 30 is thus formed between the lower partition wall 11 of the first attachment member 10 and the elastic body 30 in this embodiment, as illustrated in FIGS. 5 and 6. As a result of forming the space S2 between the first recess 13 of the lower partition wall 11 and the elastic body 30 by the notch 35 formed in the elastic body 30 as in this embodiment, the part of the elastic body 30 deformed during vibration input/output can also be released to the space S2. The spring constant in the up-down direction can be reduced in this case, too.

In this embodiment, the elastic body 30 has through holes 36. As a result of forming the through holes 36 in the elastic body 30 as in this embodiment, the part of the elastic body 30 deformed during vibration input/output can also be released to the through holes 36. The spring constant in the up-down direction can be reduced in this case, too. Although three through holes 36 are formed in this embodiment as illustrated in FIG. 5 as an example, at least one through hole 36 may be formed. For example, a larger number of through holes 36 contributes to a greater reduction of the spring constant. Although the through holes 36 extend in the longitudinal direction in this embodiment, the through holes may extend in the transverse direction.

The anti-vibration device 1 according to this embodiment includes: the first attachment member 10 configured to be connected to one of the vibration generating portion and the vibration receiving portion; the second attachment member 20 configured to be connected to the other one of the vibration generating portion and the vibration receiving portion; and the elastic body 30 located between the first attachment member 10 and the second attachment member 20, wherein the first attachment member 10 includes the upper partition wall 12 and the lower partition wall 11 arranged with a spacing in the up-down direction, the space 1S that is open in a direction intersecting the up-down direction is formed between the upper partition wall 12 and the lower partition wall 11, and the second attachment member 20 and the elastic body 30 are located in the space 1S, the lower partition wall 11 of the first attachment member 10 has the first recess 13 in which one end portion (lower end portion) 31 of the elastic body 30 is housed, the second attachment member 20 has the second recess 23 in which the other end portion (upper end portion) 32 of the elastic body 30 is housed, and the concavity portion (25) forming the space (S1) with the elastic body 30 is formed in at least one of the first recess 13 and the second recess 23. Such an anti-vibration device 1 according to this embodiment can reduce the spring constant in the direction in which the first attachment member 10 and the second attachment member 20 face each other, e.g. the spring constant in the up-down direction in this embodiment.

In the anti-vibration device 1 according to this embodiment, the notch 35 is formed on the lower end surface 33 of the elastic body 30. In this case, the spring constant in the up-down direction can be further reduced.

Moreover, in the anti-vibration device 1 according to this embodiment, the concavity portion 25 is formed in the second recess 23 of the second attachment member 20, and the notch 35 is formed on the lower end surface 33 of the elastic body 30 facing the lower partition wall 11 of the first attachment member 10. In this case, the concavity portion is not formed in the first recess 13 of the lower partition wall 11 of the first attachment member 10, with it being possible to reduce an increase in the dimension between the lower partition wall 11 and the upper partition wall 12 of the first attachment member 10, that is, the dimension of the anti-vibration device 1 in the up-down direction (the direction in which the first attachment member and the second attachment member face each other). Hence, the spring constant in the up-down direction can be reduced effectively without upsizing the whole anti-vibration device 1. In particular, by forming the concavity portion 25 only in the second recess 23 and forming the notch 35 only on the lower end surface 33 of the elastic body 30 facing the first attachment member 10 as in the anti-vibration device 1 according to this embodiment, the spring constant in the up-down direction can be further reduced without impairing the durability of the elastic body 30.

Moreover, in the anti-vibration device 1 according to this embodiment, the concavity portion 25 is shaped by a dome-shaped curved surface. In this case, when vibration is input to the elastic body 30 and the elastic body 30 enters into the concavity portion 25, the elastic body 30 undergoes displacement with respect to the concavity portion 25 (i.e. enters into the concavity portion 25) gently, so that the spring constant can be reduced smoothly.

The foregoing embodiment is merely one of the disclosed embodiments, and various changes are possible according to the scope of the claims. For example, the additional, optional concavity portion (25) formed in optionally the first recess 13 is not limited to be shaped by a dome-shaped curved surface. The concavity portion may have a pyramid-shaped inner surface, a cone-shaped inner surface, a truncated cone-shaped inner surface, a polygonal inner surface such as a cube-shaped inner surface, or the like. Moreover, the shape of the concavity portion is not limited as long as it can be formed in the first recess 13, and examples include at least one linearly extending recess such as a recess extending in the longitudinal direction or a recess extending in the transverse direction, and a cross-shaped recess formed by intersection of these recesses.

The same applies to the notch (35) formed on the lower end surface 33, and the notch (35) is not limited to be shaped by a cross-shaped recess. For example, the notch may be shaped by at least one linearly extending recess such as a recess extending in the longitudinal direction or a recess extending in the transverse direction. The notch may have a pyramid-shaped inner surface, a cone-shaped inner surface, a truncated cone-shaped inner surface, a polygonal inner surface such as a cube-shaped inner surface, or the like, and is not limited to any particular shape.

According to the present disclosure, for example, the lower partition wall 11 and the upper partition wall 12 of the first attachment member 10 may be formed by a single member. The first attachment member 10 and the second attachment member 20 may be, for example, made of metal and produced by pressing, forging, or the like. The material and the production method may be changed as appropriate depending on, for example, the environment in which the anti-vibration device according to the present disclosure is used.

As described above, according to the present disclosure, an anti-vibration device that can reduce the spring constant in the direction in which the first attachment member 10 and the second attachment member 20 face each other (the spring constant in the up-down direction in this embodiment) can be provided.

### REFERENCE SIGNS LIST

1 anti-vibration device
1S space formed between lower partition wall and upper partition wall
10 first attachment member
11 lower partition wall
12 upper partition wall
13 first recess
20 second attachment member
21 main body portion
22 engine attachment portion
23 second recess
25 concavity portion
30 elastic body
31 lower end portion of elastic body (one end portion of elastic body)
32 upper end portion of elastic body (other end portion of elastic body)
33 lower end surface of elastic body (one end surface of elastic body facing first recess)
34 upper end portion of elastic body (other end surface of elastic body facing second recess)
35 notch
36 through hole
40 stopper
S1 space formed by concavity portion
S2 space formed by notch

## Claims

1. An anti-vibration device (1), which is an engine mount, comprising:
a first attachment member (10) configured to be connected to one of a vibration generating portion and a vibration receiving portion;
a second attachment member (20) configured to be connected to an other one of the vibration generating portion and the vibration receiving portion; and
an elastic body (30) located between the first attachment member (10) and the second attachment member (20) and having an upper end surface (34),
wherein the first attachment member (10) includes an upper partition wall (12) and a lower partition wall (11) arranged with a spacing in an up-down direction, a space (1S) that is open in a direction intersecting the up-down direction is formed between the upper partition wall (12) and the lower partition wall (11), and the second attachment member (20) and the elastic body (30) are located in the space (1S),
the lower partition wall (11) of the first attachment member (10) has a first recess (13) that is a downward recess and in which a lower end portion of the elastic body (30) is housed,
the second attachment member (20) has a second recess (23) that is an upward recess and in which an upper end portion of the elastic body (30) is housed,
a concavity portion (25) forming a space (S1) with the elastic body (30) is formed in the second recess (23),
and the elastic body (30) is a block body,
**characterised in that**:
the upper end surface (34) of the elastic body (30) is a flat end surface without a notch,
the concavity portion (25) is shaped by a dome-shaped curved surface recessed upward,
the elastic body (30) has at least one through hole (36) extending in a longitudinal direction or a transverse direction of the anti-vibration device (1), and
the longitudinal direction of the anti-vibration device (1) corresponds to a front-back direction of the vehicle when mounted on a vehicle, and the transverse direction of the anti-vibration device (1) corresponds to a right-left direction of the vehicle when mounted on the vehicle.

2. The anti-vibration device (1) according to claim 1, wherein the elastic body (30) has a notch (35) on a lower end surface (33) facing the first recess (13).

## Patentansprüche

1. Schwingungsdämpfungsvorrichtung (1), die eine Motoraufhängung ist, die Folgendes umfasst:
ein erstes Befestigungselement (10), das dafür konfiguriert ist, mit einem von einem Schwingung erzeugenden Abschnitt und einem Schwingung aufnehmenden Abschnitt verbunden zu werden;
ein zweites Befestigungselement (20), das dafür konfiguriert ist, mit einem anderen von dem Schwingung erzeugenden Abschnitt und dem Schwingung aufnehmenden Abschnitt verbunden zu werden; und
einen elastischen Körper (30), der sich zwischen dem ersten Befestigungselement (10) und dem zweiten Befestigungselement (20) befindet und eine obere Endfläche (34) aufweist,
wobei das erste Befestigungselement (10) eine obere Trennwand (12) und eine untere Trennwand (11), die mit einem Abstand in einer Aufwärts-Abwärts-Richtung angeordnet sind, einschließt, ein Raum (1S), der in einer Richtung offen ist, welche die Aufwärts-Abwärts-Richtung schneidet, zwischen der oberen Trennwand (12) und der unteren Trennwand (11) geformt ist, und sich das zweite Befestigungselement (20) und der elastische Körper (30) in dem Raum (1S) befinden,
die untere Trennwand (11) des ersten Befestigungselements (10) eine erste Aussparung (13) aufweist, die eine Aussparung nach unten ist und in der ein unterer Endabschnitt des elastischen Körpers (30) untergebracht ist,
das zweite Befestigungselement (20) eine zweite Aussparung (23) aufweist, die eine Aussparung nach oben ist und in der ein oberer Endabschnitt des elastischen Körpers (30) untergebracht ist,
ein Höhlungsabschnitt (25), der einen Raum (S1) mit dem elastischen Körper (30) bildet, in der zweiten Aussparung (23) geformt ist,
und der elastische Körper (30) ein Blockkörper ist,
**dadurch gekennzeichnet, dass**:
die obere Endfläche (34) des elastischen Körpers (30) eine flache Endfläche ohne eine Kerbe ist,
der Höhlungsabschnitt (25) durch eine kuppelförmig gewölbte Fläche geformt ist, die nach oben ausgespart ist,
der elastische Körper (30) mindestens ein Durchgangsloch (36) aufweist, das sich in einer Längsrichtung oder einer Querrichtung der Schwingungsdämpfungsvorrichtung (1) erstreckt, und
die Längsrichtung der Schwingungsdämpfungsvorrichtung (1) einer Richtung von vorn nach hinten des Fahrzeugs, wenn sie an einem Fahrzeug montiert ist, entspricht, und die Querrichtung der Schwingungsdämpfungsvorrichtung (1) einer Richtung von rechts nach links des Fahrzeugs, wenn sie an dem Fahrzeug montiert ist, entspricht.

2. Schwingungsdämpfungsvorrichtung (1) nach Anspruch 1, wobei der elastische Körper (30) eine Kerbe (35) auf einer unteren Endfläche (33) aufweist, die zu der ersten Aussparung (13) zeigt.

## Revendications

1. Dispositif d'amortissement de vibrations (1), qui est un support de moteur, comprenant :
un premier élément de fixation (10) configuré pour être relié à l'une parmi une partie génératrice de vibrations et une partie réceptrice de vibrations ;
un second élément de fixation (20) configuré pour être relié à une autre parmi la partie génératrice de vibrations et la partie réceptrice de vibrations ; et
un corps élastique (30) situé entre le premier élément de fixation (10) et le second élément de fixation (20) et présentant une surface d'extrémité supérieure (34),
dans lequel le premier élément de fixation (10) inclut une paroi de séparation supérieure (12) et une paroi de séparation inférieure (11) agencées avec un espacement dans une direction haut-bas, un espace (1S) qui est ouvert dans une direction coupant la direction haut-bas est formé entre la paroi de séparation supérieure (12) et la paroi de séparation inférieure (11), et le second élément de fixation (20) et le corps élastique (30) sont situés dans l'espace (1S),
la paroi de séparation inférieure (11) du premier élément de fixation (10) présente un premier évidement (13) qui est un évidement vers le bas et dans lequel une partie d'extrémité inférieure du corps élastique (30) est logée,
le second élément de fixation (20) présente un second évidement (23) qui est un évidement vers le haut et dans lequel une partie d'extrémité supérieure du corps élastique (30) est logée,
une partie concave (25) formant un espace (S1) avec le corps élastique (30) est formée dans le second évidement (23),
et le corps élastique (30) est un corps de bloc,
**caractérisé en ce que** :
la surface d'extrémité supérieure (34) du corps élastique (30) est une surface d'extrémité plate sans encoche,
la partie concave (25) est formée par une surface incurvée en forme de dôme évidée vers le haut,
le corps élastique (30) présente au moins un trou traversant (36) s'étendant dans une direction longitudinale ou une direction transversale du dispositif d'amortissement de vibrations (1), et
la direction longitudinale du dispositif d'amortissement de vibrations (1) correspond à une direction avant-arrière du véhicule lors d'un montage sur un véhicule, et la direction transversale du dispositif d'amortissement de vibrations (1) correspond à une direction droite-gauche du véhicule lors d'un montage sur le véhicule.

2. Dispositif d'amortissement de vibrations (1) selon la revendication 1, dans lequel le corps élastique (30) présente une encoche (35) sur une surface d'extrémité inférieure (33) faisant face au premier évidement (13).
